# EUROPEAN PATENT SPECIFICATION

(11) **EP 1 531 605 B1**
(45) Date of publication and mention of the grant of the patent: **07.01.2009**
(21) Application number: 03026079.8
(22) Date of filing: 12.11.2003
(51) Int. Cl.: H04M 1/60

(54) **Method and system for noise reduction of a sound signal**
Verfahren und Vorrichtung zur Rauschverminderung in einem Schallsignal
Méthode et dispositif de diminution de bruit d'un signal sonore

(43) Date of publication of application: 18.05.2005
(73) Proprietor: Harman Becker Automotive Systems GmbH, 76307 Karlsbad (DE)
(72) Inventor: Hovestadt, Guido, 58739 Wickede-Ruhr (DE); Wolf, Stefan, 71701 Schwieberdingen (DE)
(74) Representative: Bertsch, Florian Oliver

(56) References cited:
- WO-A-00/55846
- WO-A-98/58448
- FR-A- 2 837 971
- US-A1- 2003 023 432

## Description

### Field of the invention

The invention relates to a method and to an apparatus for improving signal quality of a sound signal of a telephone or a speech recognizer used in an environment, especially a vehicle. The invention relates in particular to the reduction of noise and improvement of echo cancellation of (hands-free) telephones and the improvement of the recognition rate for speech recognizers used in a vehicle.

In recent years the use of telephones and, especially, mobile phones in vehicles has become quite popular. For in car applications telephone systems are known, which are fixedly installed in the vehicle. Furthermore it is possible to use mobile phones in the vehicle. These mobile phones can be used as a handset or they can be attached to a supporting device (e.g. cradle), which is especially designed for receiving the mobile phone. The mobile phone, received in the supporting device, is connected to a microphone, which is normally positioned preferably near the head of the driver, and to loudspeakers, which could be part of an audio system of the vehicle. In this arrangement the mobile phone is used as a hands-free telephone. In some countries the use of hands-free telephones is even required, when the user wants to make a call while driving, so that the driver can use both hands for driving and does not have to hold the telephone. In vehicles, however, the ambient noise is an important factor which strongly influences the speech intelligibility for the recipient on the other end of the connection. Especially hands-free telephones must also cope with a considerable interference, such as road or engine noise in vehicles. User-friendly hands-free telephones should offer a sound quality at least equivalent to that of a hand set.

Furthermore, speech recognition systems have also become more and more popular. In these systems the user of a device (e.g. a navigation unit or any other device in a vehicle) controls the device by speech commands. In speech recognition systems or speech recognizers the same problems arise as do in connection with mobile phones. The recognizer has to understand the voice commands of the user in a noisy environment.

Although telephones are now frequently equipped for hands-free operation, users still prefer to reach for the handset when making calls. One reason therefore is often the poor performance of the hands-free telephone. These hands-free telephones consist of a hands-free microphone and a loudspeaker. In contrast to a handset neither the distance between microphone and loudspeaker nor the position of the user are necessarily well-defined. In many cases the microphone is closer to the loudspeaker than to the user.

To overcome this problem, according to the prior art, an echo compensation is carried out, in which the echo signals, emitted from the loudspeaker and recorded from the microphone, are attenuated in order to prevent positive feedback. Furthermore, the ambient noise is reduced by a noise reduction algorithm. In the present context, however, these two parts for improving the intelligibility of speech are summarized under the term "noise reduction".

In a vehicle the microphone of the telephone or a speech recognizer picks up the speaker's voice, the ambient noise, and possible echoes emitted from the loudspeaker. The sound signal with its various components is transmitted to the other end of the line or to a processing unit in the case of a speech recognizer, the speech intelligibility dropping as soon as a strong background noise has been introduced. This is due to the fact that parts of the sound signal are masked by the noise emitted, inter alia, by the driving vehicle. This ambient noise makes it difficult to understand a user sitting in a noisy environment, e.g. a vehicle.

WO 98/58448 A discloses a noise compensation device in which the gain of amplification of a detected signal depends on the fact whether the person is speaking or not in order to reduce the background noise. The gain is reduced during speech pauses.

US 2003/023432 A1 discloses a voice recognition apparatus the device recognizing whether the voice recognition is possible or not.

FR-A-2837971 discloses a noise compensation in a vehicle where the ambient noise of the vehicle is measured. The measured ambient noise is then compared to different data sets, each of the data sets representing a certain operating condition of the vehicle.

There is the need to improve the speech intelligibility and the quality of sound for telephones or speech recognizers that are used in vehicles.

This problem is solved according to a first aspect of the invention by the independent claims.

Dependent claims are directed to preferred embodiments of the present invention.

### Summary of the invention

According to an important aspect of the present invention, the noise reduction of a sound signal of a telephone or a speech recognizer used in a noisy environment, especially in a vehicle, is attained due to the fact that the sound signal is processed in dependence on information about an operating condition of the environment, especially the vehicle. In a moving vehicle the ambient noise inside the vehicle strongly depends on the operating condition of the vehicle. By using information about the operating condition as a parameter for noise reduction, the noise of the sound signal can be reduced effectively, and the speech intelligibility can be increased. The term "operating condition" may include permanent characteristics, which are inherent to the environment or the vehicle such as car model, as well as the current operating state of the vehicle which may be determined by vehicle characteristics during the operation, e.g. noise at a given engine speed and/or surroundings i.e. influences of the environment such as road condition, weather condition and the like. For improving the intelligibility of the sound signal the algorithms for noise reduction are parameterized. These algorithms comprise echo compensation parts and noise reduction parts. According to the invention the two parts of the algorithm may now comprise another parameter taking into account the operating condition of the environment.

In order to obtain a good noise reduction, processing is performed in accordance with a current value of the operating condition of the vehicle. By the use of a current value of the operating condition the noise, which is present at a time at which the user of the telephone is speaking is used as a parameter for reducing the ambient noise. According to the invention the current information about the operating condition can be considered, when noise compensation is carried out. The term information about an operating condition comprises information about the vehicle speed.

According to a preferred embodiment of the invention the telephone is a hands-free telephone. However, it should be understood that the telephone need not be a hands-free telephone. It can also be a normal portable phone which could be provided with a head set or not. For carrying out the noise reduction according to the present invention, it is however important that the signal recorded from the microphone is processed using the information of the operating condition of the vehicle before it is transmitted to the other party. The telephone, i.e. the processing unit processing the sound signal, therefore has to receive the information about the operating condition of the vehicle. If no hands-free telephone is used there is no need for implementing the echo compensation part, but there is still the need for implementing the noise reduction part.

This operating condition may, e.g., be provided on a bus system which is incorporated in present-day vehicles. These bus systems are provided in order to coordinate the different electronic devices in the car, as e.g. car telephone, GPS navigation systems, and DVD or CD players. The telephone or speech recognizer should be connected to that bus system. The connection of the telephone to the bus system or to the source where the present operating condition is stored can be provided by using wires or can be wireless by using wireless communication techniques, e.g., Bluetooth, GSM, UMTS, Infrared, etc. Even if a hand set mobile phone is used together with a head set, noise compensation of the ambient noise is still desirable in order to improve the intelligibility and the quality of sound. In hands-free telephones, however, the need for noise reduction is more important as in these systems the distance between the microphone and the user of the telephone is greater, so that more ambient noise will deteriorate the speech intelligibility.

According to the present invention, the information about the operating condition is vehicle speed. The ambient noise in vehicles is predominantly influenced by the vehicle speed.

The noise originating from the vehicle will strongly depend on the velocity of the vehicle. When the vehicle runs at high velocities, the ambient noise due to the outside changing wind conditions will change its characteristic and its amplitude. At low velocities the ambient noise is dominated by the humming of the engine of the vehicle. The higher the velocity becomes the higher gets the influence of the wind. This changing ambient noise can be taken into consideration during reduction of the noise. When the driver of the vehicle makes a call or wants to control another device in the vehicle by voice commands while he or she is driving on a highway at high velocities, the ambient noise is louder and has to be reduced by a higher amount than it is the case when the driver is making a call while he or she is waiting in a traffic jam. In prior art systems the noise reduction was disabled, when a head set was used, as in head set systems the noise is not as predominant as in hands-free systems. According to the invention the speech intelligibility can be improved, because when the vehicle is moving the noise reduction is enabled, whereas the noise reduction may be disabled when the vehicle is at rest.

The noise generated by the engine also depends on the engine speed and, therefore, depends on the used gear. The higher the engine speed becomes, the louder will be the ambient noise caused by the engine. Therefore, by using information about the vehicle speed, the sound signal of a telephone can be improved noticeably, if the volume and the characteristic of the ambient noise is known and the sound signal is compensated using this information about the ambient noise. At low velocities the ambient noise is low, so that the noise reduction is limited to a minimum or even omitted. The higher the velocity becomes, the more noise of the vehicle has to be compensated.

According to another embodiment of the present invention the information about the operating condition may comprise information whether the vehicle is a convertible car and whether it is driven with an open or closed top. The fact that the vehicle is a convertible car and the fact that the car is driven without using the roof, strongly influences the ambient noise. The fact that a driver of a vehicle drives a convertible car with the roof top down will strongly influence the noise. When a vehicle is used with the top down, the wind is a predominant factor for noise, so that this noise has to be reduced. Another factor which influences the noise in a telephone or in a speech recognizer used in a vehicle is the information whether all windows of the vehicle are closed or not. This information can be used together with or instead of all the other information for processing the sound signal.

According to another embodiment of the invention, the method for noise reduction uses the information whether the vehicle is driving under rain or not. This information can be detected by a weather detector comprised in the vehicle. The noise of a vehicle strongly depends on the fact whether the vehicle drives on a dry or wet road. When this information is used during the signal processing of the sound signal, the noise can be reduced, as the sound generated by the vehicle driving on a wet or dry underground can be identified and, therefore, could be considered while processing the signal before it is transmitted to the other party on the other side of the line.

For reducing the noise of a sound signal, the following steps may be carried out. First of all, the sound signal is input into the telephone or the speech recognizer while the user is speaking. During this process the microphone of the telephone or of the speech recognizer picks up acoustical sound signal. This sound signal can then be transmitted to a processing device for reducing noise, where the necessary signal processing is carried out for reducing the noise in the sound signal. In a next step, the operating condition of the vehicle is detected, and the detected information of the operating condition is also transmitted to the processing device. The processing device compensates the sound signal with the transmitted information of the operating condition, the compensated sound signal being output to the other party on the other side of the line in the case of a telephone. The processing steps carried out in the processing device are known to the person skilled in the art, so that they will not be described in detail. According to the present invention the operating condition may be input into the processing device as a parameter to be used in the noise reduction algorithm, which is used for reducing the noise of the sound signal.

By the above-described method another parameter describing the current operating condition of the vehicle is used for reducing the noise of a sound signal. This parameter has a strong impact on the noise, so that, when this new parameter is used for noise reduction, a strong tool is available to carry out the reduction of noise in the processing device. It should be understood that the invention is not restricted to vehicles. The invention can be used in any "environment" in which the ambient noise depends on an operating condition of the environment. Furthermore, the invention can be used for speech recognition systems or for the signal transmission of voice signals which are recorded in an environment comprising ambient noise (e.g. mobile phones, hands-free phones, phones with head sets, etc.). According to an important aspect of the invention the operating condition of the vehicle has to be determinable and the operating condition must have a predominant influence on the noise generated in the environment.

In order to effectively reduce the noise, the following procedure may be carried out. First of all, a predetermined relationship between operating condition and noise is provided. This relationship is normally determined in advance and can be stored in a memory comprised in the vehicle. In a next step, the current operating condition of the vehicle is detected. When the current operating condition is known, the noise value can be determined in accordance with the detected operating condition. Last, but not least, the noise of the sound signal can be reduced by the determined noise value. According to this procedure, an accurate determination of the noise value is possible, the latter being used for compensating the sound signal of the telephone. However, the parameters taking into account the operating condition could also be input manually into the system. The predetermined relationship between operating condition and noise could also be provided on a server which is accessible via the internet. The user could then download the vehicle specific relationship and use it for the noise reduction.

The parameters taking into account the operating condition can also be stored for future use. It may be the case that the parameters with the specific operating condition were determined for different operating conditions. In this case, the parameters can be determined for similar operating conditions in a learning mode.

The operating condition of the vehicle could be, e.g., the vehicle speed, the engine speed, and/or the gear. However, all the other information which influences the ambient noise in a vehicle can be used, e.g., the one mentioned above.

Another parameter, which influences the noise in a vehicle, is the environment, in which the vehicle is moving. Therefore this parameter can also be used for noise reduction of a sound signal of a telephone or a speech recognizer, which is used in a vehicle. According to this embodiment of the invention, the position of the vehicle is determined. Subsequently, the determined position is compared to street map data. In the next step, an environment data is determined by correlating the determined position and the street map data, and the noise is reduced by processing the sound signal in dependence on the environment data. The information about the environment data may comprise information about the road on which the vehicle is traveling and/or information whether the vehicle is traveling in a tunnel or a passage underground. The noise produced by the vehicle while it is driving on a paved road is completely different compared to a noise when the vehicle is driving on a metal road. If the vehicle is traveling in a tunnel, the ambient noise is very different from the noise when the vehicle is driving on a normal road. Present-day cars are often equipped with devices for determining the position of the vehicle in order to navigate the driver. The position of the vehicle is normally displayed together with the street map data, and the direction to a predetermined destination is indicated to the driver. These street map data normally contain information on what kind of road the vehicle is moving. This information can be used in order to determine the noise produced by the vehicle due to the environment.

The position of the vehicle may be determined by a navigation device which comprises a satellite (GPS) receiver. A GPS receiver receives position data from the GPS satellites and calculates therefrom a position of the vehicle. However, it should be understood that for determining the position of the vehicle all methods used in present navigation devices could be used, be it GPS systems or hybrid navigation systems relying on GPS and the use of gyroscopes and speed measurements, or any other methods for determining the position of a moving vehicle.

Every type of vehicle produces another typical sound during driving. Therefore, the predetermined vehicle operating condition/noise relationship may be determined for different vehicle models, the vehicle operating condition/noise relationship being selected in accordance with the model of the vehicle. It should be understood that a sports car has another engine noise than has a diesel driven or an electrically driven vehicle. The operating condition/noise relationship can be determined for every type of vehicle, so that the matching characteristic can be chosen to reduce the noise.

The invention further relates to an apparatus for reducing noise of a sound signal of a telephone or speech recognizer which is used in an environment, especially a vehicle, comprising a processing device for processing the sound signal, a means for detecting a current operating condition of the environment, wherein the processing device processes the sound signal in dependence on a detected operating condition of the environment. The apparatus of the invention is preferably used in noisy environments, such as vehicles. This apparatus allows an efficient reduction of noise, as the sound signal of the telephone is processed by using a further parameter which strongly influences the ambient noise inside the vehicle.

The means for detecting the operating condition of the vehicle may be a motor control unit. This motor control unit normally comprises all the information needed to control the engine of the vehicle, such as vehicle speed, engine speed, etc. Normally, all this information is also available on the above-mentioned bus system, to which a motor control unit and/or the apparatus of the present invention are connected.

Since all information needed to determine the current operating conditions is already present in a vehicle, an additional electronic component to determine these values is not necessary. Thus, the apparatus for reducing noise can be produced in a cheap way, as all the needed information is already present in the vehicle.

The vehicle may further comprise a weather sensor which determines the wind characteristics outside the vehicle and/or which determines whether it is raining or not. As mentioned above, the wind characteristics and/or the fact that the road on which the vehicle is driving is wet considerably influence the noise in the vehicle, so that this information could also be used in order to reduce the noise by processing the sound signal in the processing device.

The apparatus may further comprise a memory in which a predetermined operating condition/noise relationship is stored. This relationship is used for determining the noise in dependence on the current operating condition, such as vehicle speed, or engine speed, etc.

The apparatus may further comprise a navigation device which determines the present location of the vehicle, the navigation device comprising a memory unit for storing map data. This navigation device can be used to determine, first, the position of the vehicle and to correlate this position with the street map data comprised in the navigation device.

Other uses and advantages of the present invention will become apparent to those skilled in the art upon reference to the specification and the drawings.

Fig. 1 shows an apparatus for reducing noise in a vehicle.

Fig. 2 shows another apparatus for reducing noise in a vehicle.

Fig. 3 shows a method for reducing noise of a sound signal.

Fig. 4 shows another method for reducing noise of a sound signal.

Fig. 5 shows another way for reducing noise in a sound signal.

Fig. 6 shows a method which considers environment data for reducing noise.

Fig. 7 shows different steps for reducing noise by considering vehicle speed and/or engine speed for reducing the noise.

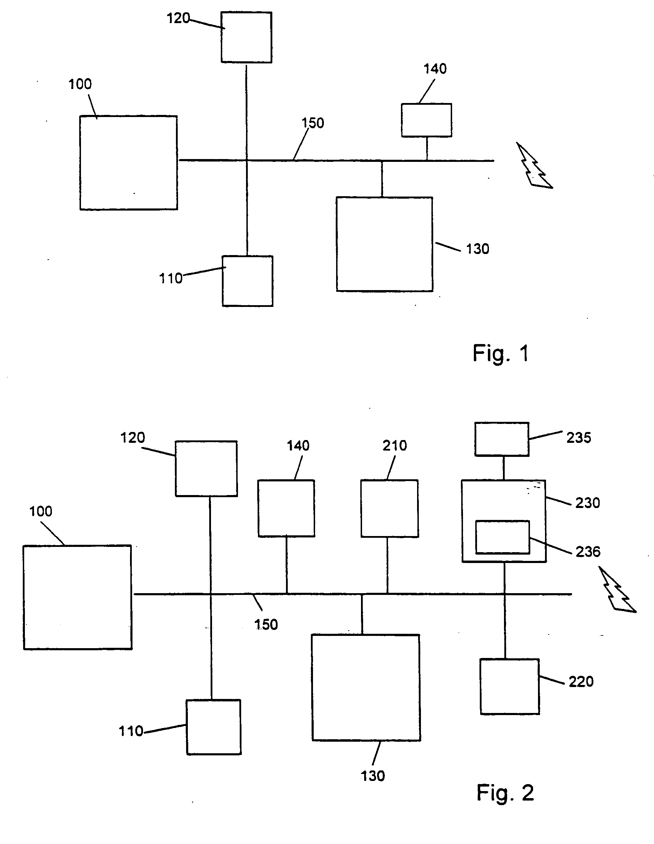

The apparatus for reducing noise according to Fig. 1 is comprised in a vehicle (not shown). This apparatus comprises a telephone 100 which may be a hands-free telephone having a greater distance between a loudspeaker 110 and a microphone 120. The telephone 100 may also be a hand set where during use the telephone, loudspeaker and microphone are comprised in one housing, as it is the case with mobile phones. The apparatus further comprises a processing unit 130 which will process the sound signal which is detected by the microphone 120. The operating condition of the vehicle is detected by a means for detecting a current operating condition 140. Means 140 could be a motor control unit or any other unit which comprises information about vehicle speed, engine speed, or any other information influencing the ambient noise in a vehicle. Instead of using a telephone, a speech recognizer could also be used.

After the signal is processed taking into consideration the operating condition provided by the detecting means 140, it is transmitted to the other party on the other end of the line by using wireless communication. The telephone 100, the processing device, and the means for detecting a current operating condition will communicate by using a bus system 150. However, any other kind of communication system between the shown devices is possible.

In Fig. 2 another apparatus for reducing noise of a sound signal is shown. The apparatus of Fig. 2 comprises the same features as shown in Fig. 1, so that its function will not be described in detail any more. The apparatus of Fig. 2 further comprises a memory 210 in which a relationship between the operating condition and noise is stored. As will be explained in detail below, this relationship will help to determine the ambient noise produced by the vehicle in an exact manner. The apparatus of Fig. 2 may further contain a weather sensor 220 which detects the actual weather outside the vehicle. This weather sensor can, e.g., detect whether it is raining or not, or whether the road on which the vehicle is driving is wet. It may further detect the wind conditions outside the vehicle. These parameters strongly influence the noise inside the vehicle, so that this information may help to exactly determine the ambient noise.

The apparatus may further comprise a navigation device 230, the latter comprising a GPS receiver 235 and a memory unit 236 for storing the map data. Further to its object to navigate the user of the vehicle, the navigation device may be used to determine the environment in which the vehicle is driving. By correlating the determined position which was determined by the GPS receiver 235 and other indications such as vehicle speed and direction and the street map data information can be generated which will help to determine the exact noise inside the vehicle.

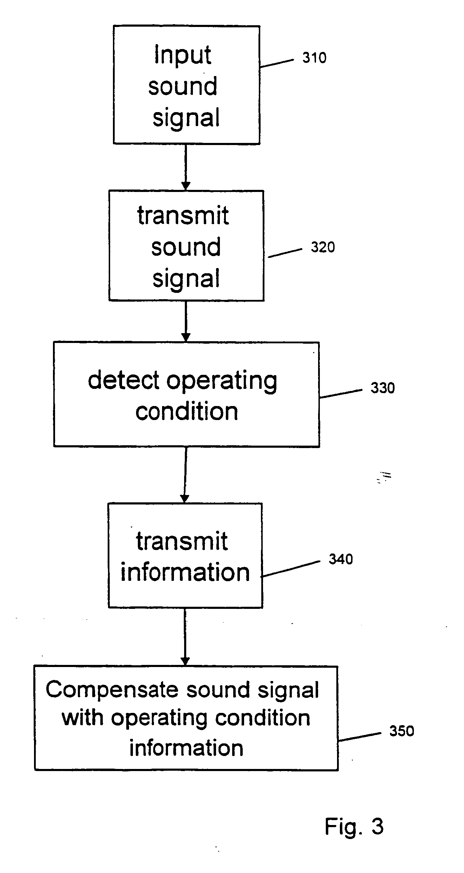

Fig. 3 shows the main steps for reducing the noise of a sound signal when a user of a telephone or a speech recognizer is speaking in a vehicle. When the user is speaking, a sound signal is input into the telephone (step 310). This sound signal comprises the sound of the voice of the user and ambient noise, such as possible echo signals or a noise caused by the vehicle. This sound is transmitted in step 320 to the processing device 130. Furthermore, the operating condition is detected in step 330, the operating condition being the vehicle speed, engine speed, information about the environment or about whether all windows are closed or not, etc. In step 340 the detected information of the operating condition is transmitted to the processing device. Subsequently, the sound signal input into the microphone at step 310 is then compensated with the transmitted information of the operating condition in step 350. In a next step (not shown), the compensated sound signal may be output and transmitted to the other party with an increased speech intelligibility and an increased quality of sound.

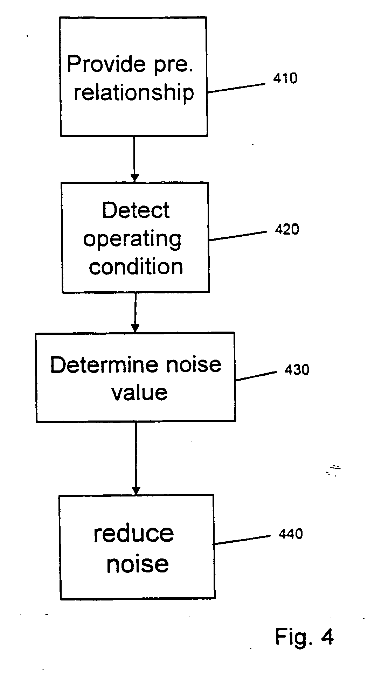

In Fig. 4 a further example for reducing the noise of the sound signal of a telephone is shown. In a first step 410 a predetermined relationship between an operating device and noise is provided. This relationship between the operating condition and noise is determined in advance and can, e.g, be stored in the memory 210. In the next step, the operating condition of the vehicle is detected (step 420). In this relationship for every operating condition of the vehicle a noise value is fixed. E.g., for every possible vehicle speed from 0 to 200 km/h the noise of the vehicle is stored. Using the detected operating condition and the predetermined relationship the related noise value can be determined (step 430). The determined noise value can then be used to reduce the noise of the sound signal in step 440. The above-mentioned method will help to improve the speech intelligibility and the quality of sound as it is received by the other party. E.g., if the vehicle drives at low velocity, the noise from the vehicle engine and the noise from outside the vehicle because of the passing air will be very low so that hardly any noise compensation is needed. If the vehicle is at rest, this compensation could be totally omitted. If, however, the vehicle runs at high speed, the above-described method will reduce the noise generated by the vehicle in an efficient manner. Therefore, the quality of sound is improved considerably during the different operating conditions of the vehicle.

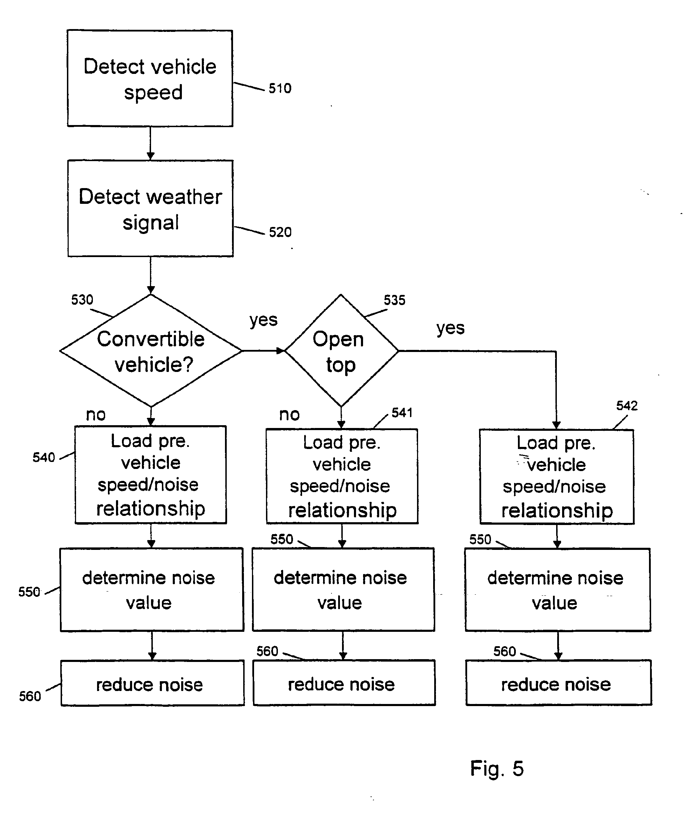

In Fig. 5 another example for reducing noise and for improving the quality of sound is shown. In step 510 the vehicle speed is detected by the detecting means for detecting the operating condition 140. Furthermore, the weather conditions are detected in step 520 by using the weather sensor 220. This could mean that the weather detector detects whether it is raining or not. The noise generated by the vehicle, when it is driving on a wet road, is different from the noise when the vehicle is driving on a dry road. These weather conditions can be taken into consideration when the noise is to be reduced. In a next step 530, it can be decided whether a convertible vehicle is used or not. Even in a closed state of the roof the ambient noise is different for convertible cars and for normal cars having a fixedly arranged top. If the used vehicle is not a convertible car, the predetermined vehicle speed/noise relationship is loaded into a working memory (not shown) of the processing device 130 (step 540). In the next step 550, a noise value is determined by using the vehicle speed detected in 510 and by using the predetermined relationship between vehicle speed and noise provided in step 540. In step 560, the noise of the sound signal is reduced by the determined noise value of step 550. When the vehicle is a convertible vehicle it is decided in step 535 whether the user of the vehicle uses the vehicle with open top or not. If the top is not open, a predetermined vehicle speed/noise relationship is loaded (step 541). This vehicle speed/noise relationship takes into account that the vehicle is a convertible vehicle, but is not driven with open top. The relationship loaded at step 541 will be different from the relationship loaded in step 540. In step 550, again, the noise value is determined by using the vehicle speed/noise relationship provided in step 541, and the noise is reduced in step 560 as mentioned in step 560 above.

If the vehicle is used with open top, another predetermined vehicle speed/noise relationship has to be loaded in step 542. This relationship takes into account that the influence of the wind and the vehicle speed is much greater than in the other two cases. Again, as in the other two cases, in step 550 the noise value is determined by using the vehicle speed and the predetermined vehicle speed/noise relationship, and the noise is reduced in step 560.

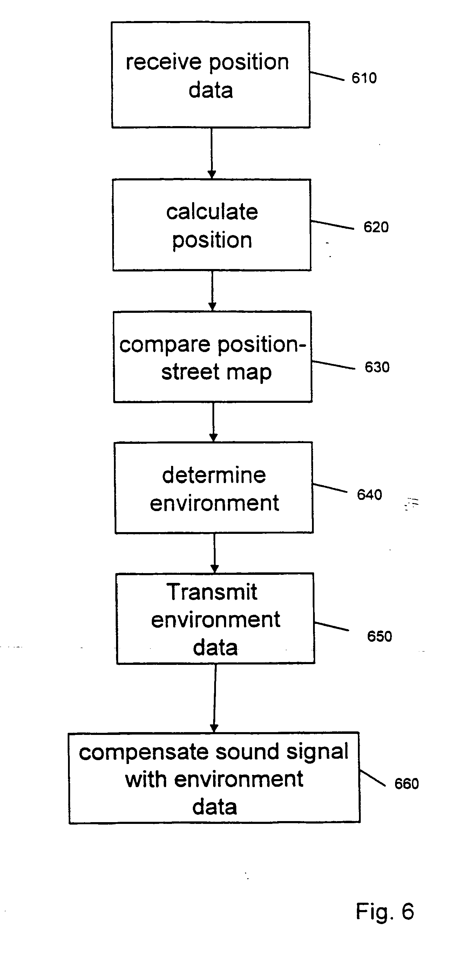

In Fig. 6 another method for noise reduction is shown. It should be understood that all the different methods shown in the different Figures can be combined with all the other methods shown in the other Figures, so that each of the shown methods can be combined with each of the other shown methods.

In the embodiment shown in Fig. 6 the environment in which the vehicle is moving is taken into account. In step 610, the vehicle receives position data which can originate, e.g., from the GPS satellites by using the GPS receiver 235. By using these data the position of the vehicle can be calculated in step 620. It should be understood that the way the position is determined in steps 610 and 620 can be replaced by any other way known by the person skilled in the art for determining the position of a vehicle.

In step 630, the calculated position is compared to street map data which are stored in the memory unit 236, but which could also be provided to the vehicle by using wireless communication from a remote base station. By correlating the determined position and the street map data, the environment can be determined. In this context, the term "environment" means that all the facts are considered which will probably influence the noise generated by the vehicle. This information about the environment can, e.g., comprise information whether the vehicle is driving on a paved road or not. Furthermore, it may contain information whether the vehicle is traveling in a tunnel, what will considerably influence the ambient noise. In step 650 these environment data are transmitted to the processing device 130 which reduces the noise by compensating the sound signal with the environment data (step 660). This environment data is another parameter that could be used for noise reduction in combination with the parameters already mentioned above.

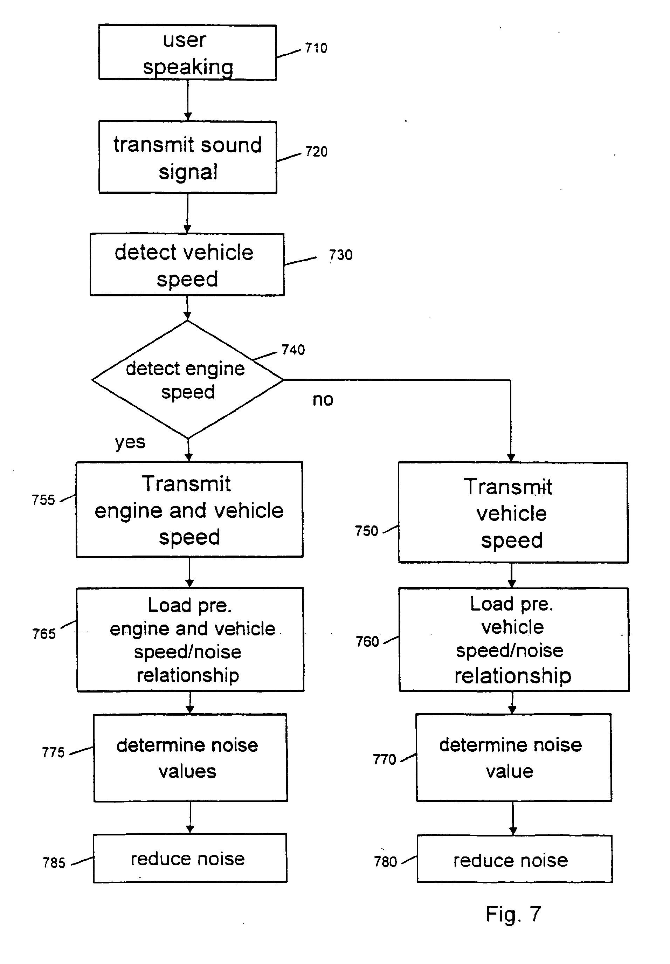

In Fig. 7 a further example for combining different parameters which influence the noise of a sound signal is shown. When the user is speaking (step 710), the sound signal is transmitted to the microphone in the vehicle (step 720). Furthermore, the vehicle speed is detected in step 730. In step 740 it is to be decided whether an engine speed is detected together with the vehicle speed or not. If the engine speed is not detected, the vehicle speed is transmitted to a processing device 130 in step 750. The predetermined vehicle speed/noise relationship is loaded into the working memory of the processing device 130 (step 760), the noise value is determined using the vehicle speed and the predetermined relationship (step 770), and the noise is reduced (step 780). If it is decided to consider the vehicle speed together with the engine speed, the engine and the vehicle speed are transmitted to the processing device 130 (step 755). In step 765 the predetermined engine speed/noise relationship and the predetermined vehicle speed/noise relationship are loaded into the processing device 130. It is obvious for the person skilled in the art that the vehicle speed alone may not provide enough information in order to determine the noise of the vehicle. E.g., the noise of the vehicle driving at a certain velocity in the second gear will be completely different from the noise when driving at the same velocity in the fourth or fifth gear.

With the two considered parameters, engine and vehicle speed, the noise value of the vehicle is determined in step 775, and the noise is reduced in step 785. From Fig. 7 it can be seen that in dependence on the chosen accuracy the noise of a sound signal of a telephone used in a vehicle can be reduced, when different numbers of parameters are used for the noise reduction. Information about the engine and the vehicle speed will surely increase the quality of sound as it would be the case, if only the vehicle speed was considered.

It should be understood that the different parameters mentioned above can be used alone or can be used in combination with each other in dependence on the desired sound quality of the sound signal.

In conclusion, the present invention provides a reliable and easy method to remarkably improve the speech intelligibility and the quality of sound of a sound signal of a telephone of speech recognizer that is used in a noisy environment.

In connection with vehicles, the invention shows considerable improvements when for hands-free telephones the noise reduction is disabled when the vehicle is at rest. When a head set is used the echo compensation part contained in the noise reduction can be disabled, so that for every operating condition of the vehicle the optimal results can be obtained for different kinds of telephones or speech recognizers.

## Claims

1. Method for noise reduction of a sound signal when a user of a telephone or a speech recognizer is speaking in a vehicle, wherein the sound signal is processed in dependence on information about an operating condition of the vehicle, **characterized in that** the operating condition is the vehicle speed and the noise reduction is enabled when the vehicle is moving and the noise reduction is disabled when the vehicle is at rest.

2. Method according to claims 1, wherein processing is performed in accordance with a current value of the operating condition of the environment.

3. Method according to claim 1 or 2, wherein the telephone (100) is a hands-free telephone.

4. Method according to any of the preceding claims, wherein the information about the operating condition comprises information whether the vehicle is a convertible car and whether the vehicle is driving with an open or closed top, or information whether or not the windows of the vehicle are closed.

5. Method according to any of the preceding claims, wherein the information about the operating condition comprises information whether the vehicle is driving under rain or not, this information being detected by a weather sensor (220) comprised in the vehicle.

6. Method according to any of the preceding claims, comprising the steps of
- inputting said sound signal into the telephone (100) or speech recognizer,
- transmitting said sound signal to a processing device (130),
- detecting the operating condition of the vehicle,
- transmitting the detected information of the operating condition to the processing device (130),
- compensating the sound signal with the transmitted information of the operating condition,
- outputting the compensated sound signal.

7. Method according to any of the preceding claims, further comprising the steps of
- providing a predetermined relationship between an operating condition and noise,
- detecting the current operating condition of the vehicle,
- determining the noise value in accordance to the detected operating condition and said predetermined relationship,
- reducing the noise of the sound signal by the determined noise value.

8. Method according to claim 7, wherein the current operating condition is at least one of vehicle speed, engine speed, and gear.

9. Method according to any of the preceding claims, further comprising the steps of
- determining the position of the vehicle,
- comparing the determined position to street map data,
- determining an environment data by correlating the determined position and the street map data,
- reducing the noise by processing the sound signal in dependence on the environment data.

10. Method according to claim 9, **characterized in that** the information about the environment data comprises information the about road, on which the vehicle is traveling, or an information, whether the vehicle is traveling in a tunnel or a passage underground.

11. Method according to claim 9 or 10, **characterized in that** the position of the vehicle is determined by a navigation device (230), which comprises a satellite receiver (235).

12. Method according to any of claims 8 or 11, wherein the predetermined vehicle operating condition/noise relationship is determined for different vehicle models, the vehicle operating condition/noise relationship being selected in accordance with the model of the vehicle.

13. Method according to any of the preceding claims, wherein the operating condition of the vehicle is detected by a motor control unit, transmitted to a bus system (150) installed in the vehicle, the processing device (130) compensating the noise of the sound signal by using the information of the operating condition provided on the bus system.

14. Apparatus for reducing noise of a sound signal when a user of a telephone (100) or a speech recognizer is speaking in a vehicle, comprising a processing device (130) for processing the sound signal, a means for detecting a current operating condition (140) of the environment, the processing device processing the sound signal in dependence on a detected operating condition of the vehicle, the operating condition being the vehicle speed **characterized in that** the processing device is adapted to enable the noise reduction of the sound signal when the vehicle is moving and the processing device is adapted to disable the noise reduction when the vehicle is at rest.

15. Apparatus according to claim 14, **characterized in that** the means for detecting the operating condition (140) of the vehicle is a motor control unit.

16. Apparatus according to claim 14 or 15, further comprising a weather sensor (220) comprised in the vehicle, which is adapted to determine the wind characteristics outside the vehicle, or which is adapted to determine whether or not is it raining.

17. Apparatus according to any of claims 14 to 16, wherein the apparatus is connected to a bus system (150) in the vehicle, on which the operating condition of the vehicle is provided.

18. Apparatus according to any of claims 14 to 17, further comprising a memory (210) in which a predetermined operating condition/noise relationship is stored.

19. Apparatus according to any of claims 14 to 18, further comprising a navigation device (230) which is adapted to determine the present location of the vehicle, the navigation device comprising a memory unit for storing map data.

20. Apparatus according to any of claims 14 to 19, **characterized in that** the sound signal is processed as claimed in one of the claims 1 to 13.

## Patentansprüche

1. Verfahren zur Geräuschreduzierung eines akustischen Signals, wenn ein Benutzer eines Telefons oder eines Spracherkenners in einem Fahrzeug spricht, wobei das akustische Signal in Abhängigkeit von einer Information über einen Betriebszustand des Fahrzeugs verarbeitet wird, **dadurch gekennzeichnet, dass** der Betriebszustand die Fahrzeuggeschwindigkeit ist, und dass die Geräuschreduzierung eingeschaltet wird, wenn sich das Fahrzeug bewegt, und die Geräuschreduzierung abgeschaltet wird, wenn das Fahrzeug steht.

2. Verfahren nach Anspruch 1, wobei die Verarbeitung gemäß eines aktuellen Werts des Betriebszustands der Umgebung durchgeführt wird.

3. Verfahren nach Anspruch 1 oder 2, wobei das Telefon (100) ein Freisprechtelefon ist.

4. Verfahren nach einem der vorstehenden Ansprüche, wobei die Information über den Betriebszustand eine Information umfasst, ob das Fahrzeug ein Cabrio ist und ob das Fahrzeug mit einem offenen oder geschlossenen Verdeck fährt, oder eine Information, ob die Fenster des Fahrzeugs geschlossen sind oder nicht.

5. Verfahren gemäß einem der vorstehenden Ansprüche, wobei die Information über den Betriebszustand eine Information umfasst, ob das Fahrzeug im Regen fährt oder nicht, wobei diese Information von einem Wettersensor (220) detektiert wird, den das Fahrzeug umfasst.

6. Verfahren nach einem der vorstehenden Ansprüche, die weiteren Schritte umfassend
- Eingeben des akustischen Signals in das Telefon (100) oder den Spracherkenner,
- Senden des akustischen Signals an eine Verarbeitungsvorrichtung (130),
- Detektieren des Betriebszustands des Fahrzeugs,
- Senden der detektierten Information über den Betriebszustand an die Verarbeitungsvorrichtung (130),
- Kompensieren des akustischen Signals mit der gesendeten Information über den Bebtriebszustand,
- Ausgeben des kompensierten akustischen Signals.

7. Verfahren nach einem der vorstehenden Ansprüche, die weiteren Schritte umfassend
- Bereitstellen einer vorbestimmten Beziehung zwischen einem Betriebszustand und einem Geräusch,
- Detektieren des aktuellen Betriebszustands des Fahrzeugs,
- Bestimmen des Geräuschwerts gemäß des detektierten Betriebszustands und der vorbestimmten Beziehung,
- Verringern des Geräuschs in dem akustischen Signal durch den bestimmten Geräuschwert.

8. Verfahren nach Anspruch 7, wobei der aktuelle Betriebszustand mindestens einen der Betriebszustände Fahrzeuggeschwindigkeit, Motorengeschwindigkeit und Gang umfasst.

9. Verfahren nach einem der vorstehenden Ansprüche, des Weiteren die Schritte umfassend
- Bestimmen der Position des Fahrzeugs,
- Vergleichen der bestimmten Position mit Straßenkartendaten,
- Bestimmen von Umgebungsdaten durch Korrelieren der bestimmten Position und der Straßenkartendaten,
- Reduzieren des Geräuschs durch Verarbeiten des akustischen Signals in Abhängigkeit von den Umgebungsdaten.

10. Verfahren nach Anspruch 9, **dadurch gekennzeichnet, dass** die Information über die Umgebungsdaten Informationen über die Straße, auf welcher das Fahrzeug fährt, oder eine Information, ob das Fahrzeug in einem Tunnel oder einer Unterführung fährt, umfasst.

11. Verfahren nach Anspruch 9 oder 10, **dadurch gekennzeichnet, dass** die Position des Fahrzeugs von einer Navigationsvorrichtung (230) bestimmt wird, welche einen Satellitenempfänger (235) umfasst.

12. Verfahren nach einem der Ansprüche 8 oder 11, wobei die vorbestimmte Fahrzeugbetriebszustand/Geräusch-Beziehung für verschiedene Fahrzeugmodelle bestimmt wird, wobei die Fahrzeugbetriebszustand/Geräusch-Beziehung gemäß dem Modell des Fahrzeugs ausgewählt wird.

13. Verfahren nach einem der vorstehenden Ansprüche, wobei der Betriebszustand des Fahrzeugs von einer Motorsteuerungseinheit detektiert wird, und zu einem in dem Fahrzeug installierten Bussystem (150) gesendet wird, wobei die Verarbeitungsvorrichtung (130) das Geräusch in dem akustischen Signal unter Verwendung der Information über den Betriebszustand, die auf dem Bussystem bereitgestellt wird, kompensiert wird.

14. Vorrichtung zum Reduzieren von Geräuschen in einem akustischen Signal, wenn ein Benutzer eines Telefons (100) oder eines Spracherkenners in einem Fahrzeug spricht, umfassend eine Verarbeitungsvorrichtung (130) zum Verarbeiten des akustischen Signals, ein Mittel zum Detektieren eines aktuellen Betriebszustands (140) der Umgebung, wobei die Verarbeitungsvorrichtung das akustische Signal in Abhängigkeit von einem detektierten Betriebszustand des Fahrzeugs verarbeitet, wobei der Betriebszustand die Fahrzeuggeschwindigkeit ist, **dadurch gekennzeichnet, dass** die Verarbeitungsvorrichtung ausgestaltet ist, um die Geräuschreduzierung des akustischen Signals einzuschalten, wenn sich das Fahrzeug bewegt, und dass die Verarbeitungsvorrichtung ausgestaltet ist, um die Geräuschreduzierung abzuschalten, wenn das Fahrzeug steht.

15. Vorrichtung nach Anspruch 14, **dadurch gekennzeichnet, dass** das Mittel zum Detektieren des Betriebszustands (140) des Fahrzeugs eine Motorsteuerungseinheit ist.

16. Vorrichtung nach Anspruch 14 oder 15, des Weiteren einen Wettersensor (220) umfassend, der in dem Fahrzeug umfasst ist, welcher zum Bestimmen der Windeigenschaften außerhalb des Fahrzeugs ausgestaltet ist oder welcher zum Bestimmen, ob es regnet oder nicht, ausgestaltet ist.

17. Vorrichtung nach einem der Ansprüche 14 bis 16, wobei die Vorrichtung mit einem Bussystem (150) in dem Fahrzeug verbunden ist, auf welchem der Betriebszustand des Fahrzeugs bereitgestellt wird.

18. Vorrichtung nach einem der Ansprüche 14 bis 17, des Weiteren einen Speicher (210) umfassend, in welchem eine vorbestimmte Betriebszustand/Geräusch-Beziehung gespeichert ist.

19. Vorrichtung nach einem der Ansprüche 14 bis 18, des Weiteren eine Navigationsvorrichtung (230) umfassend, welche ausgestaltet ist, um die aktuelle Position des Fahrzeugs zu bestimmen wobei die Navigationsvorrichtung eine Speichereinheit zum Speichern von Kartendaten umfasst.

20. Vorrichtung nach einem der Ansprüche 14 bis 19, **dadurch gekennzeichnet, dass** das akustische Signal wie in einem der Ansprüche 1 bis 13 beansprucht verarbeitet wird.

## Revendications

1. Procédé pour la réduction du bruit d'un signal sonore lorsqu'un utilisateur d'un téléphone ou d'un dispositif de reconnaissance de la parole parle dans un véhicule, dans lequel le signal sonore est traité en fonction d'informations concernant une condition opérationnelle du véhicule, **caractérisé en ce que** la condition opérationnelle est la vitesse du véhicule et la réduction du bruit est activée lorsque le véhicule est en marche et la réduction du bruit est désactivée lorsque le véhicule est à l'arrêt.

2. Procédé selon la revendication 1, dans lequel un traitement est effectué conformément à une valeur actuelle de la condition opérationnelle de l'environnement.

3. Procédé selon la revendication 1 ou 2, dans lequel le téléphone (100) est un téléphone mains libres.

4. Procédé selon l'une quelconque des revendications précédentes, dans lequel les informations concernant la condition opérationnelle comprennent des informations quant à si le véhicule est une voiture décapotable et si le véhicule roule avec un toit ouvert ou fermé, ou des informations quant à si les vitres du véhicule sont fermées ou non.

5. Procédé selon l'une quelconque des revendications précédentes, dans lequel les informations concernant la condition opérationnelle comprennent des informations quant à si le véhicule roule sous la pluie ou non, ces informations étant détectées par un capteur météorologique (220) compris dans le véhicule.

6. Procédé selon l'une quelconque des revendications précédentes, comprenant les étapes consistant à
- entrer ledit signal sonore dans le téléphone (100) ou le dispositif de reconnaissance de la parole,
- transmettre ledit signal sonore à un dispositif de traitement (130),
- détecter la condition opérationnelle du véhicule,
- transmettre les informations détectées de la condition opérationnelle au dispositif de traitement (130),
- compenser le signal sonore avec les informations de la condition opérationnelle transmises,
- sortir le signal sonore compensé.

7. Procédé selon l'une quelconque des revendications précédentes, comprenant en outre les étapes consistant à
- fournir une relation prédéterminée entre une condition opérationnelle et le bruit,
- détecter la condition opérationnelle actuelle du véhicule,
- déterminer la valeur de bruit conformément à la condition opérationnelle détectée et à ladite relation prédéterminée,
- réduire le bruit du signal sonore par la valeur de bruit déterminée.

8. Procédé selon la revendication 7, dans lequel la condition opérationnelle actuelle est au moins une parmi la vitesse du véhicule, le régime du moteur et le rapport de vitesse.

9. Procédé selon l'une quelconque des revendications précédentes, comprenant en outre les étapes consistant à
- déterminer la position du véhicule,
- comparer la position déterminée à des données cartographiques de rue,
- déterminer des données d'environnement en corrélant la position déterminée et les données cartographiques de rue,
- réduire le bruit en traitant le signal sonore en fonction des données d'environnement.

10. Procédé selon la revendication 9, **caractérisé en ce que** les informations concernant les données d'environnement comprennent des informations concernant la route sur laquelle le véhicule circule ou des informations quant à si le véhicule circule dans un tunnel ou un passage souterrain.

11. Procédé selon la revendication 9 ou 10, **caractérisé en ce que** la position du véhicule est déterminée par un dispositif de navigation (230), qui comprend un récepteur satellite (235).

12. Procédé selon l'une quelconque des revendications 8 ou 11, dans lequel la relation condition opérationnelle du véhicule/bruit prédéterminée est déterminée pour différents modèles de véhicule, la relation condition opérationnelle du véhicule/bruit étant sélectionnée suivant le modèle du véhicule.

13. Procédé selon l'une quelconque des revendications précédentes, dans lequel la condition opérationnelle du véhicule est détectée par une unité de commande du moteur, transmise à un système de bus (150) installé dans le véhicule, le dispositif de traitement (130) compensant le bruit du signal sonore en utilisant les informations de la condition opérationnelle fournies sur le système de bus.

14. Appareil pour réduire le bruit d'un signal sonore lorsqu'un utilisateur d'un téléphone (100) ou d'un dispositif de reconnaissance de la parole parle dans un véhicule, comprenant un dispositif de traitement (130) pour traiter le signal sonore, des moyens pour détecter une condition opérationnelle actuelle (140) de l'environnement, le dispositif de traitement traitant le signal sonore en fonction d'une condition opérationnelle détectée du véhicule, la condition opérationnelle étant la vitesse du véhicule, **caractérisé en ce que** le dispositif de traitement est adapté pour activer la réduction du bruit du signal sonore lorsque le véhicule est en marche et le dispositif de traitement est adapté pour désactiver la réduction du bruit lorsque le véhicule est à l'arrêt.

15. Appareil selon la revendication 14, **caractérisé en ce que** les moyens pour détecter la condition opérationnelle (140) du véhicule sont fournis par une unité de commande du moteur.

16. Appareil selon la revendication 14 ou 15, comprenant en outre un capteur météorologique (220) compris dans le véhicule, qui est adapté pour déterminer les caractéristiques de vent à l'extérieur du véhicule, ou qui est adapté pour déterminer s'il pleut ou non.

17. Appareil selon l'une quelconque des revendications 14 à 16, dans lequel l'appareil est connecté à un système de bus (150) dans le véhicule, sur lequel la condition opérationnelle du véhicule est fournie.

18. Appareil selon l'une quelconque des revendications 14 à 17, comprenant en outre une mémoire (210) dans laquelle une relation condition opérationnelle/bruit prédéterminée est stockée.

19. Appareil selon l'une quelconque des revendications 14 à 18, comprenant en outre un dispositif de navigation (230) qui est adapté pour déterminer la localisation présente du véhicule, le dispositif de navigation comprenant une unité de mémoire pour stocker des données cartographiques.

20. Appareil selon l'une quelconque des revendications 14 à 19, **caractérisé en ce que** le signal sonore est traité selon l'une des revendications 1 à 13.
